# EUROPÄISCHE PATENTSCHRIFT

(11) **EP 2 168 114 B1**
(45) Veröffentlichungstag und Bekanntmachung des Hinweises auf die Patenterteilung: **08.12.2010**
(21) Anmeldenummer: 08773903.3
(22) Anmeldetag: 08.07.2008
(51) Int. Cl.: G09F 3/02, G09F 3/10

(54) **SICHERHEITSETIKETT**
SAFETY LABEL
ETIQUETTE DE SÉCURITÉ

(30) Priorität: 11.07.2007 DE 102007032620
(43) Veröffentlichungstag der Anmeldung: 31.03.2010
(73) Patentinhaber: Hagmaier, Werner, 72625 Münsingen (DE)
(72) Erfinder: Hagmaier, Werner, 72625 Münsingen (DE)
(74) Vertreter: Maser, Jochen
(86) Internationale Anmeldenummer: PCT/EP2008/005533
(87) Internationale Veröffentlichungsnummer: WO 2009/007085

(56) Entgegenhaltungen:
- WO-A-03/061960
- DE-B3-102006 010 382
- US-A- 5 192 611

## Beschreibung

Die Erfindung betrifft ein Sicherheitsetikett zur Visualisierung von Kräften.

Aus der WO 03/061960 A1 geht ein Etikett zur Visualisierung von magnetischen Einflüssen beziehungsweise Kräften hervor. Dieses Etikett umfasst einen Schichtaufbau mit einer ersten Substratschicht, die auf einer Schicht von magnetsensitiven Mikrokapseln aufgebracht ist. Die zuletzt genannte Schicht ist mit einer opaken Grundschicht versehen, die durch eine Klebeschicht auf einem Gegenstand befestigt werden kann. Die magnetempfindlichen Mikrokapseln umfassen eine Mischung aus magnetischen Partikeln in einer Suspensionsschicht. Solche magnetischen Partikel sind aus Metall ausgebildet und weisen eine erste und zweite Oberfläche mit unterschiedlich optischer Oberfläche auf. Beim Einwirken eines Magnetfeldes auf diese Schicht werden die magnetischen Partikel durch Rotation ausgerichtet.

Aus der US-PS 5,079,058 geht ein laminierter Schichtaufbau hervor, bei dem eine Fluidschicht durch einen Prozess präpariert wird, der auf einer Seite der Schicht ein pulverförmiges Magnetmaterial zur Bildung eines Fluidfilmes aufweist und in Abhängigkeit der Magnetkraft arbeitet. Dabei soll beim Einwirken der Magnetkraft ein Muster durch die Magnetelemente in dem Fluidfilm, beispielsweise aus Kunststoff und einem Lösemittel, erzeugt werden.

Solche Vorrichtungen weisen den Nachteil auf, dass diese in der Herstellung aufwändig sind. Darüber hinaus ist eine Aussage über eine einwirkende Mindestmagnetkraft nicht möglich.

Aus der DE 10 2006 010 382 B3 ist ein Sicherheitsetikett zur Visualisierung von darauf einwirkenden magnetischen Einfluss bekannt. Ein solches Sicherheitsetikett weist eine Trägerschicht sowie eine darauf angebrachte semipermeable Schicht auf, wobei die semipermeable Schicht durch eine Schutzschicht abgedeckt ist. Zwischen der Trägerschicht und der semipermeablen Schicht kann eine leicht haftende Klebemittelschicht aufgebracht sein, auf welche Metallteilchen aufgebracht sind. Die semipermeable Schicht weist Klappen auf, die bei einem Einwirken einer magnetischen Kraft auf das Sicherheitsetikett in Richtung der Schutzschicht öffnen, so dass einzelne magnetisch ansprechende Metallteilchen durch die semipermeable Schicht hindurchwandern können. Nach dem Einwirken der Magnetkraft schließen sich die Klappen selbständig und in einer Indikatorzone zwischen der semipermeablen Schicht und der transparenten Schutzschicht sammeln sich die Metallteilchen an. Es wird zunehmend gewünscht, dass die nachteiligen Auswirkungen durch die Einwirkung von Magnetkräften, die eine bestimmte, wenn auch geringe, Kraft übersteigen, und beispielsweise Beschädigungen oder Manipulationen bewirken, gezielt erfasst werden.

Der Erfindung liegt deshalb die Aufgabe zugrunde, ein Sicherheitsetücett zu schaffen, welches einen einfachen Aufbau umfasst und ermöglicht, dass eine Krafteinwirkung auf das Sicherheitsetikett erst ab einer vorbestimmten Mindestkraft visualisiert wird.

Diese Aufgabe wird erfindungsgemäß durch die Merkmale des Anspruchs 1 gelöst. Weitere vorteilhafte Ausgestaitungen und Weiterbildungen der Erfindung sind in den weiteren Ansprüchen angegeben.

Durch die erfindungsgemäße Ausgestaltung eines Sicherheitsetiketts mit einer Funktionsschicht, die zumindest eine Indikatorzone aufweist, welche zumindest eine Sollbruchstelle umfasst, wird ermöglicht, dass das zwischen einer Trägerschicht und der Funktionsschicht aufgebrachte Indikatormedium erst dann auf eine gegenüberliegende Seite der Funktionsschicht gelangt und eine Krafteinwirkung visualisiert, sobald eine vorbestimmte Mindestkraft vorherrscht, welche die Funktionsschicht, in der die Sollbruchstelle liegt, auftrennt, damit das Indikatormedium die Sollbruchstelle durchwandern und auf der gegenüberliegenden Seite der Funktionsschicht die Krafteinwirkung visualisiert. Dadurch wird ermöglicht, dass kleinere Einflüsse von Kräften, die nicht zu einer Schädigung des Gegenstandes führten, auf welcher das Sicherheitsetikett aufgebracht ist oder noch nicht zu einer Manipulation eines Gerätes führen, auf welchem das Sicherheitsetikett angebracht ist, nicht angezeigt werden, da die Funktionsschicht im Bereich der Sollbruchstelle zunächst nicht durchtrennt ist. Somit trennt die Funktionsschicht das Indikatormedium im nicht aktivierten Zustand vollständig ab, so dass das Indikatormedium nicht auf die gegenüberliegende Seite der Funktionsschicht wandern kann, beispielsweise durch Erschütterungen beim Transport eines Sicherheitsetikettes, die nicht einem anzuzeigenden Ergebnis entsprechen. Dadurch kann eine präzise Aussage bezüglich den einwirkenden Kräften ermöglicht werden, und zwar dahingehend, ob diese einen vorbestimmten Mindestwert überschritten haben. Eine solche Aussage kann beispielsweise für die Beurteilung von Beschädigungen eines Gerätes oder einer Vorrichtung aufgrund von Beschleunigungskräften beziehungsweise Stößen von Bedeutung sein. Darüber hinaus kann auch eine Manipulation durch magnetische Krafteinflüsse angezeigt werden, wie dies beispielsweise bei der Manipulation von Stromzählern von Bedeutung ist, die einen Stillstand des Stromzählers während einem tatsächlichen Verbrauch detektieren.

Nach einer vorteilhaften Ausgestaltung der Erfindung ist vorgesehen, dass die zumindest eine Sollbruchstelle in der Indikatorzone durch eine gegenüber der Schichtdicke der Funktionsschicht reduzierten Wanddicke ausgebildet ist. Durch das Einbringen von einer Vertiefung zur Bildung der Sollbruchstelle wird ermöglicht, dass ab einer vordefinierten Kraft, welche auf das Sicherheitsetikett einwirkt, ein Aufbrechen der Sollbruchstelle erfolgt. Durch die verbleibende Wandstärke der Sollbruchstelle ist eine Voreinstellung der Aufbruchkraft zum Öffnen der Sollbruchstelle ermöglicht. Dadurch wird gleichzeitig die Mindestkraft bestimmt, welche durch das Sicherheitsetikett in den jeweiligen Anwendungsfällen angezeigt werden soll. Bei geringeren Kräften schließt die Sollbruchstelle die Indikatorzone weiterhin ab, so dass das zwischen der Trägerschicht und der Funktionsschlcht sich befindende Indikatormedium die Funktionsschicht nicht durchwandern kann.

Des Weiteren ist bevorzugt vorgesehen, dass mehrere Indikatorzonen in die Funktionsschicht eingebracht sind, die durch von einander abweichende Vertiefungen der Sollbruchstellen gegenüber der sich im Übrigen erstreckenden Wandstärke der Funktionsschicht außerhalb der Indikatorzonen ausgebildet sind. Dadurch werden unterschiedlich hohe Stufen der Krafteinwirkung auf das Sicherheitsetikett visualisiert. Somit wird eine spezifische Aussage möglich, die zur Bestimmung des Grades von Beschädigungen oder Manipulationen hilfreich Ist.

Die Sollbruchstelle der Funktionsschicht wird bevorzugt durch eine Prägung, Stanzung oder Laserbearbeitung eingebracht. Beispielsweise können Folien mit einer Schichtdicke von weniger als 100 µm, insbesondere weniger als 50 µm, vorgesehen werden, wobei die Prägung, Stanzung oder Laserbearbeitung eine Verringerung der Wandstärke ermöglicht, so dass beispielsweise weniger als 10 µm Wandstärke in der Sollbruchstelle verbleiben.

Nach einer weiteren vorteilhaften Ausgestaltung der Erfindung ist vorgesehen, dass die Funktionsschicht einseitig bearbeitet wird und mit einer Spannung auf die Trägerschicht aufgebracht ist. Insbesondere beim Einbringen der zumindest einen Sollbruchstelle durch eine Laserbearbeitung, vorzugsweise einem interaktiven Laser, wird eine Vorspannung in der Indikatorzonen, insbesondere im Bereich der Sollbruchstelle, aufgebaut. Dies hat zur Folge, dass beispielsweise beim Auftreten von harten Beschleunigungen ein schlagartiges Öffnen oder Aufspringen der Sollbruchstelle ermöglicht wird. Durch eine solche Bearbeitung lässt sich wiederum die Öffnungskraft der Sollbruchstelle vorbestimmen.

Die zumindest eine Indikatorzone in der Funktionsschicht weist bevorzugt eine Prägung mit einem erhöhten Bereich gegenüber einem Randbereich der Indikatorzone auf, wobei die Sollbruchstellen vorzugsweise auf den erhöhten Bereich zugerichtet sind. Durch diesen erhöhten Bereich wird erzielt, dass sowohl vertikal als auch horizontal zur Funktionsschicht wirkenden Kräfte erfassbar sind und ein Aufbrechen der Sollbruchstelle bewirken können, um die einwirkende Kraft anzuzeigen. Durch die Ausrichtung der Sollbruchstellen, vorzugsweise in Richtung auf den erhöhten Bereich, wird eine vereinfachte Herstellung ermöglicht.

Der erhöhte Bereich der Indikatorzone ist gemäß einer weiteren vorteilhaften Ausgestaltung der Erfindung pyramidenförmig, pyramidenstumpfförmig, kegelförmig oder kegelstumpfförmig ausgebildet. Dadurch können einfache Geometrien zur Ausgestaltung der Indikatorzonen sowie zum Anzeigen von horizontalen und vertikalen Kräften auf die Funktionsschicht eingesetzt werden.

Zwischen der Trägerschicht und der Funktionsschicht ist zumindest im Bereich der Indikatorzone bevorzugt ein Indikatormedium eingebracht. Im übrigen Bereich kann eine Klebemittelschicht vorgesehen werden, um einen sicheren Verbund zwischen der Trägerschicht und der Funktionsschicht zu ermöglichen.

Das Indikatormedium besteht gemäß einer ersten alternativen Ausführungsform aus magnetisch ansprechenden Metallteilchen. Dadurch können sowohl Magnetkrafteinflüsse als auch Beschleunigungskräfte erfasst werden.

Nach einer weiteren alternativen Ausgestaltung der Erfindung ist vorgesehen, dass das Indikatormedium als Farbpulver, insbesondere als trockener Farbbildner, ausgebildet ist. Dadurch lassen sich auf das Sicherheitsetikett einwirkende Beschleunigungskräfte visualisieren. Solche Farbbildner können punktgenau, insbesondere durch Laminieren, auf die Trägerschicht aufgebracht werden.

Nach einer weiteren bevorzugten Ausgestaltung der Erfindung ist ein sich zwischen der Schutzschicht und der Funktionsschicht befindendes Klebemittel außerhalb der Indikatorzone vorgesehen. Dadurch bleiben die an der Sollbruchstelle angrenzenden auslenkbaren Bereiche frei beweglich und ermöglichen einen guten Durchgang des Indikatormediums.

Nach einer weiteren Ausgestaltung der Erfindung ist vorgesehen, dass ein zwischen der Schutzschicht und Funktionsschicht vorgesehenes Klebemittel transparent ausgebildet ist und aus einem nicht härtenden Klebemittel besteht. Dadurch können die Partikel des Indikatormediums nach dem Durchwandern der Sollbruchstelle in dem noch nicht aushärtenden Klebemittel aufgenommen und fixiert werden und eine irreversible Anzeige ermöglichen.

Nach einer weiteren vorteilhaften Ausgestaltung der Erfindung ist vorgesehen, dass ein erhöhter Bereich der Indikatorzone einen Aktivator zum erleichterten Öffnen der zumindest einen Sollbruchstelle aufweist. Gleichzeitig ermöglicht ein solcher Aktivator auch ein definiertes Öffnen der zumindest einen Sollbruchstelle durch die Masse des Aktivators als auch der Größe beziehungsweise dessen Materialeigenschaften.

Bevorzugt ist der Aktivator als Kugel ausgebildet. Somit kann ein solcher Aktivator beim Einsatz als Beschleunigungskraftindikator dahingehend angepasst werden, dass die verbleibende Wandstärke der Sollbruchstelle in Abhängigkeit der Masse des Aktivators steht. Bei der Verwendung als Sicherheitsetikett zur Visualisierung von Magnetkrafteinflüssen kann der Aktivator aus ferritischem Material ausgebildet sein, wobei die Masse des Aktivators unter Berücksichtigung der Beschleunigungskraft eines einwirkenden Magnetfeldes bestimmt wird. Der Aktivator wird bevorzugt während eines Laminierprozesses eingebracht. Dadurch ist eine definierte Anordnung und Positionierung zur jeweiligen Sollbruchstelle in der Indikatorzone ermöglicht.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Seitenansicht eines erfindungs- gemäßen Schichtaufbaus eines Sicherheitsetiketts,
- Figur 2: eine schematische Schnittdarstellung entlang der Li- nie II-II in Figur 1,
- Figur 3: eine schematisch vergrößerte Schnittdarstellung der Indikatorzone in Figur 1,
- Figur 4: eine schematische Schnittdarstellung einer alternati- ven erfindungsgemäßen Ausführungsform eines Si- cherheitsetiketts und
- Figur 5: eine schematische Schnittdarstellung entlang der Li- nie V-V in Figur 4.

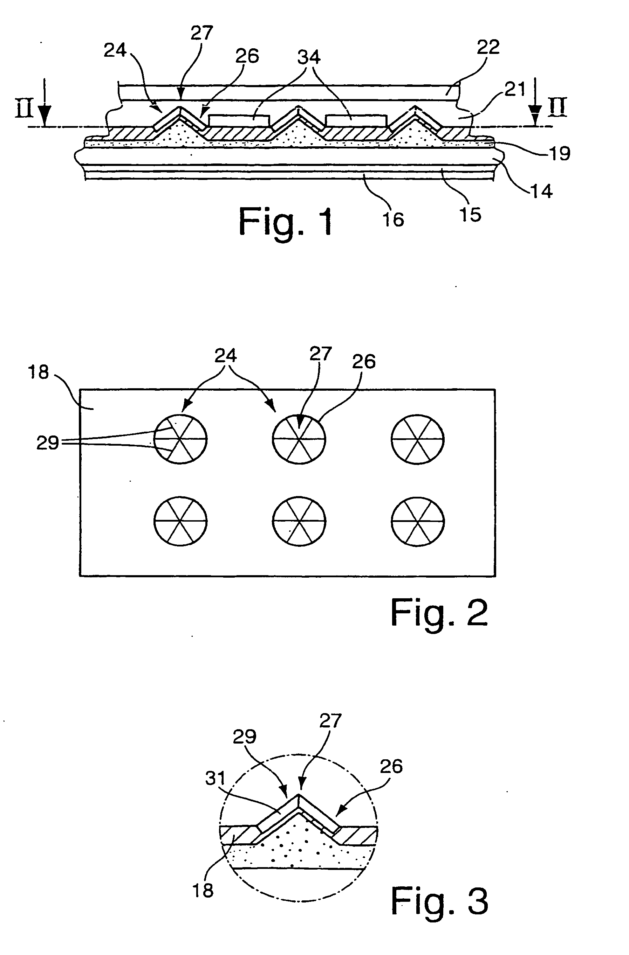

In Figur 1 ist eine schematisch vergrößerte Schnittdarstellung eines erfindungsgemäßen Sicherheitsetiketts 11 dargestellt. Solche Sicherheitsetiketten 11 dienen zur Visualisierung von darauf einwirkenden Kräften und weisen bevorzugt eine flächige Erstreckung von wenigen Quadratmillimetern bis einigen Quadratzentimetern auf. Das Sicherheitsetikett 11 umfasst eine Trägerschicht 14, die gemäß dem Ausführungsbeispiel mit einer fest haftenden Klebeschicht 15 und einer darauf angeordneten Schutzfolie 16 versehen ist. Eine solche Schutzfolie 16 wird unmittelbar vor dem Anbringen des Sicherheitsetiketts 11 an seinem Bestimmungsort abgezogen, so dass ein selbstklebendes Sicherheitsetikett 11 ausgebildet und an dem Bestimmungsort befestigbar ist.

Die Trägerschicht 14 nimmt auf einer der Klebeschicht 15 gegenüberliegenden Seite eine Funktionsschicht 18 durch eine Klebemittelschicht 19 auf, welche zumindest bereichsweise zwischen der Funktionsschicht 18 und der Trägerschicht 14 vorgesehen ist. Auf die Funktionsschicht 18 wird wiederum zumindest bereichsweise eine Klebemittelschicht 21 aufgebracht, um die Funktionsschicht 18 mit einer Schutzschicht 22 abzudecken. Diese Schutzschicht 22 ist zumindest bereichsweise transparent ausgebildet.

Die in Figur 1 dargestellte Funktionsschicht 18 weist Indikatorzonen 24 auf, welche in Figur 2 in einer Draufsicht und in Figur 3 im Schnitt vergrößert dargestellt sind. Diese Indikatorzonen 24 umfassen einen gegenüber einem Randbereich 26 erhöhten Bereich 27. Im Ausführungsbeispiel ist diese Indikatorzone 24 im Querschnitt gesehen pyramidenförmig oder kegelförmig ausgebildet. Alternativ kann auch eine kegelstumpf- oder pyramidenstumpfförmige oder eine daran angeordnete Querschnittsgeometrie vorgesehen sein. Die Indikatorzone 24 umfasst zumindest eine Sollbruchstelle 29, welche in Figur 3 vergrößert dargestellt ist. Eine solche Sollbruchstelle 29 ist durch eine verringerte Wanddicke der Funktionsschicht 18 ausgebildet. Diese verringerte Wanddicke wird durch eine Vertiefung 31 ausgebildet, welche beispielsweise durch Prägen, Stanzen oder durch eine Laserbearbeitung eingebracht wird. Dabei ist jedoch vorgesehen, dass die Vertiefung 31 die Wandstärke der Funktionsschicht 18 nicht durchtrennt, so dass die Funktionsschicht 18 gegenüber der Schutzschicht 22 im Ausgangszustand eine hermetisch abgeschlossene Ebene ausbildet.

Zwischen der Funktionsschicht 18 und der Trägerschicht 14 ist insbesondere im Bereich der Indikatorzone 24 ein Indikatormedium 32 vorgesehen. Dieses Indikatormedium 32 kann im Bereich der Indikatorzone 24 in die Klebemittelschicht eingebracht werden. Alternativ kann vorgesehen sein, dass sich die Klebemittelschicht 19 nicht in den unterhalb der Indikatorzone 24 liegenden Bereich erstreckt und das Indikatormedium 32 ausschließlich in diesen Bereich unterhalb der Indikatorzone 24 vorgesehen und von der Klebemittelschicht 19 seitlich umgeben ist.

Als Indikatormedium 32 können magnetisch ansprechende Metallteilchen in einem Bereich unterhalb der Indikatorzone 24 vorgesehen sein. Der Einsatz von magnetisch ansprechenden Metallteilchen ermöglicht die Visualisierung von einwirkende Magnetkräften. Das Einwirken von Magnetkräften wird beispielsweise zur Manipulation von Stromzählern eingesetzt, um diese durch die Magnetkräfte stillzusetzen, so dass trotz eines gleichzeitigen Verbrauches des Stromes der Stromzähler angehalten wird.

Des Weiteren kann das Indikatormedium 32 als Farbpulver, insbesondere trockener Farbbildner, ausgebildet werden. Ein solches Indikatormedium wird beispielsweise zur Visualisierung von Beschleunigungskräften verwendet. Dadurch können auftretende Beschleunigungskräfte, insbesondere Schläge, Stöße oder ein Aufprall, visualisiert werden, um nachzuvollziehen, welche Kräfte auf einen Gegenstand oder eine Vorrichtung eingewirkt haben. Beispielsweise kann der Aufprall eines Gehäuses auf dem Boden durch unbeabsichtigtes Handhaben der Vorrichtung, wie beispielsweise einer Kamera oder eines sensiblen Messinstrumentes, ermittelt und nachgewiesen werden. Dadurch ist ein solches Sicherheitsetikett wertvoll in der Beurteilung von möglichen Gewährleistungsansprüchen.

Die in Figur 3 vergrößert dargestellte Indikatorzone 24 weist die Vertiefung 31 auf derjenigen Oberflächenseite der Funktionsschicht 18 auf, weiche den erhöhten Bereich 27 bildet. Dadurch ist die durchgehende Oberfläche zum Indikatormedium 32 weisend ausgebildet, und ein mögliches teilweises Einbringen des Indikatormediums 32 in die Vertiefung 31 ist nicht ermöglicht, welche sich nachteilig auf die definierte Öffnungskraft der Sollbruchstelle 29 auswirken könnte. Die Vertiefung 31 kann beispielsweise bei einer Funktionsschicht 18 mit einer Schichtdicke von 10 µm bis 100 µm, beispielsweise 1 µm bis 2 µm, betragen. Durch die Einbringung einer Temperatur beim interaktiven Lasern in die Vertiefung 31 wird eine definierte Vorspannung in der Indikatorzone 24 erzielt, so dass bei einer einwirkenden Beschleunigungskraft, beispielsweise durch einen Schlag, einen Aufprall oder einen Stoß, ein schlagartiges Aufspringen der Sollbruchstelle 29 ermöglicht ist. Dadurch kann das Indikatormedium 32 auf die gegenüberliegende Seite der Funktionsschicht 18 wandern und zeigt dabei die Krafteinwirkung durch die zwischen der Schutzschicht 22 und die Funktionsschicht 18 gewanderten Partikel des Indikatormediums 32 an, wobei die Schutzschicht 22 zumindest im Bereich der Indikatorzone transparent ausgebildet ist.

Das Sicherheitsetikett 11 kann beispielsweise mehrere Indikatorzonen 24 nebeneinander liegend aufweisen, deren Sollbruchstelle 29 durch jeweils eine unterschiedliche Vertiefung 31 ausgebildet ist. Beispielsweise kann die erste Sollbruchstelle einen verbleibenden Wandabschnitt von 1 µm und die zweite Sollbruchstelle einen verbleibenden Wandabschnitt von 2 µm usw. aufweisen. Dadurch können unterschiedlich stark einwirkende Beschleunigungskräfte angezeigt werden. Des Weiteren kann vorgesehen sein, dass das Sicherheitsetikett 11 zumindest zwei Indikatorzonen 24 mit derselben Vertiefung 31 zur Bildung der Sollbruchstelle 29 aufweist, wodurch eine redundante Anzeige und somit eine eigene Überprüfung der angezeigten einwirkenden Kraft ermöglicht ist.

Die Anzahl und die Anordnung der Sollbruchstellen 29 gemäß Figur 2 ist nur beispielhaft. Es können auch nur eine oder zwei Sollbruchstellen 29 in der Indikatorzone 24 vorgesehen werden, um ein Durchwandern der Funktionsschicht 18 im Bereich der Indikatorzone 24 durch das Indikatormedium 32 zu ermöglichen.

Um einen gleichmäßigen Aufbau der einzelnen Schichten zu erzielen, kann des Weiteren zwischen der Funktionsschicht 18 und der Klebemittelschicht 21 eine Beschichtung 34 vorgesehen sein, die außerhalb der Indikatorzonen 24 auf der Funktionsschicht 18 aufgebracht ist. Dadurch kann durch diese Beschichtung 34 eine Auffütterung ermöglicht werden, um die Höhendifferenz zwischen dem erhöhten Bereich 27 der Indikatorzone 24 und dem Randbereich 26, der in die Ebene der Funktionsschicht 18 übergeht beziehungsweise darin liegt, zu überwinden. Eine solche Auffütterung kann durch einen Farbaufdruck, insbesondere durch ein Siebdruckverfahren, ermöglicht sein.

Zur Herstellung eines solchen Schichtaufbaus 12 für ein Sicherheitsetikett 11 ist vorgesehen, dass zunächst in die Funktionsschicht 18 die Indikatorzonen 24 eingebracht werden. Dabei kann durch ein Stanzen, Prägen oder Laserbearbeiten die Vertiefung 31 zur Bildung der zumindest einen Sollbruchstelle 29 eingebracht werden und anschließend die Ausgestaltung des erhöhten Bereiches 27 durch eine Prägung erfolgen. Diese Schritte können auch gleichzeitig oder in umgekehrter Reihenfolge vorgesehen sein. Im Anschluss daran werden auf eine Unterseite der Funktionsschicht 18 das Indikatormedium 32 und eine Klebemittelschicht 19 aufgetragen. Nach diesem Klebemittelauftrag, beispielsweise durch einen Hotmelt-Kleber, kann die Trägerschicht 14 aufgebracht werden. Diese Trägerschicht 14 kann bereits die Schutzfolie 16 umfassen. Auf der gegenüberliegenden Seite der Funktionsschicht 18 wird beispielsweise die Beschichtung 34 durch Siebdruckverfahren aufgebracht, bis die Höhe zwischen dem Randbereich 26 und dem erhöhten Bereich 27 überwunden ist. Anschließend wird die Klebemittelschicht 21 auflaminiert, wobei gleichzeitig oder nachfolgend die zumindest teilweise, vorzugsweise im Bereich der Indikatorzone 24, transparente Schutzschicht 22 auflaminiert wird.

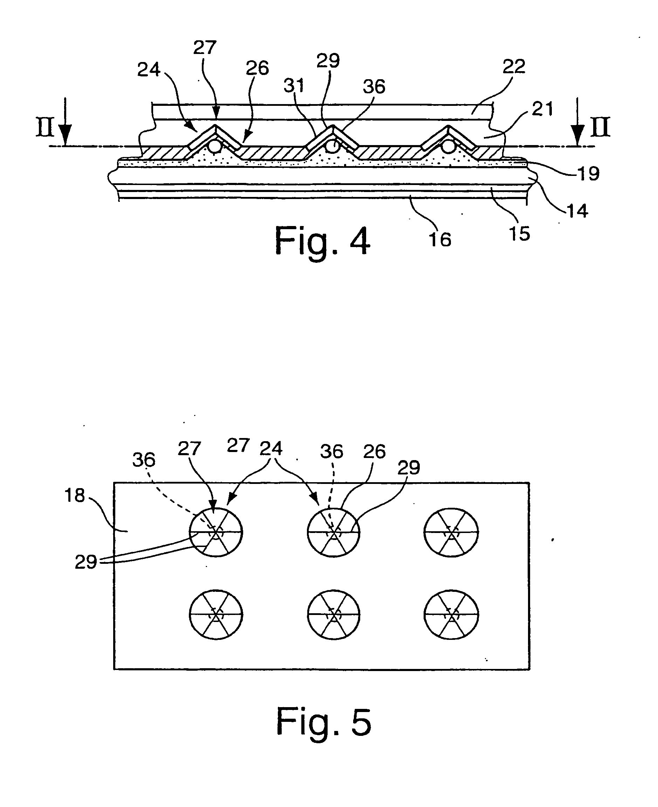

In Figur 4 ist eine schematische Schnittdarstellung eines Sicherheitsetiketts 11 gemäß einer alternativen Ausführungsform zu Figur 1 dargestellt. In Figur 5 ist eine Draufsicht auf die Funktionsschicht 18 und deren Indikatorzonen 24 gemäß der alternativen Ausführungsform zu Figur 4 dargestellt. Nachfolgend werden lediglich die Abweichungen beschrieben. Im Hinblick auf die Übereinstimmungen wird auf die vorstehende Beschreibung zu den Figuren 1 bis 3 verwiesen.

Im erhöhten Bereich 27 der Indikatorzone 24 ist ein Aktivator 36 vorgesehen, der beispielsweise als Kugel ausgebildet ist. Dieser Aktivator 36 wird von einer Unterseite der Funktionsschicht 18 eingebracht beziehungsweise ist auf derjenigen Seite der Funktionsschicht 18 vorgesehen, die der Vertiefung 31 gegenüberliegt. Durch diesen Aktivator 36 soll beim Auftreten von Kräften ein definiertes schlagartiges Öffnen der Sollbruchstelle 29 in der Indikatorzone 24 erzielt werden. Insbesondere beim Auftreten von Beschleunigungskräften kann durch den Schlag, Stoß oder Aufprall das Öffnen der Sollbruchstelle 29 durch den Aktivator 36 unterstützt werden. Der Aktivator 36 wird beispielsweise durch Laminieren aufgebracht und ist in dem erhöhten Bereich 27 positioniert. Gegebenenfalls kann der Aktivator 36 während dem Laminieren auch geringfügig in den erhöhten Bereich 27 eingedrückt werden, um eine weitere Verringerung der Wandstärke als auch eine weitere Erzielung einer Vorspannung zu erzielen. Durch die Größe des Aktuators 36 als auch dessen Materialeigenschaften kann wiederum die Öffnungskraft bestimmt werden.

Alle vorbeschriebenen Merkmale sind jeweils für sich erfindungswesentlich und können beliebig miteinander kombiniert werden.

## Patentansprüche

1. Sicherheitsetikett zur Visualisierung von einer äußeren Kraft, die auf das Sicherheitsetikett (11) einwirkt, mit zumindest einer Trägerschicht (14), welche eine Funktionsschicht (18) aufnimmt und mit einer zumindest bereichsweise transparenten Schutzschicht (22) abgedeckt ist, wobei zwischen der Funktionsschicht (18) und der Trägerschicht (14) ein Indikatormedium (32) vorgesehen ist, und, wobei die Funktionsschicht (18) zumindest eine Indikatorzone (24) aufweist, **dadurch gekennzeichnet, dass** die Indikatorzone zumindest eine Sollbruchstelle (29) umfasst, dergestalt, dass im Bereich der Sollbruchstelle (29) die Funktionsschicht (18) nicht durchtrennt ist und erst beim Einwirken einer vorbestimmten äußeren Kraft die Sollbruchstelle (29) aufgetrennt wird, so dass das Indikatormedium (32) auf eine gegenüberliegende Seite der Funktionsschicht (18) gelangen kann und durch die zumindest bereichsweise transparente Schutzschicht (22) sichtbar ist.

2. Sicherheitsetikett nach Anspruch 1, **dadurch gekennzeichnet, dass** die zumindest eine Sollbruchstelle (29) in der Indikatorzone (24) durch eine Vertiefung (31) ausgebildet ist, durch welche die Schichtdicke der Funktionsschicht (18) reduziert ist.

3. Sicherheitsetikett nach einem der vorhergehenden Ansprüche, **dadurch gekennzeichnet, dass** mehrere Indikatorzonen (24) vorgesehen sind, die durch von einander abweichende Vertiefungen (31) der Sollbruchstelle (29) ausgebildet sind.

4. Sicherheitsetikett nach einem der vorhergehenden Ansprüche, **dadurch gekennzeichnet, dass** die zumindest eine Sollbruchstelle (29) der Funktionsschicht (18) durch eine Prägung, Stanzung oder Laserbearbeitung eingebracht ist.

5. Sicherheitsetikett nach einem der vorhergehenden Ansprüche, **dadurch gekennzeichnet, dass** die Funktionsschicht (18) einseitig bearbeitet und mit einer Spannung auf die Trägerschicht (14) aufgebracht ist.

6. Sicherheitsetikett nach einem der vorhergehenden Ansprüche, **dadurch gekennzeichnet, dass** die Indikatorzone (24) eine Prägung mit einem gegenüber einem Randbereich (26) erhöhten Bereich (27) aufweist und die zumindest eine Sollbruchstelle (29) vorzugsweise in dem erhöhten Bereich (27) vorgesehen ist.

7. Sicherheitsetikett nach Anspruch 6, **dadurch gekennzeichnet, dass** der erhöhte Bereich (27) der Indikatorzone (24) pyramidenförmig, pyramidenstumpfförmig, kegelförmig oder kegelstumpfförmig ausgebildet ist.

8. Sicherheitsetikett nach einem der vorhergehenden Ansprüche, **dadurch gekennzeichnet, dass** zumindest in der Indikatorzone (24) ein Indikatormedium (32) eingebracht und zumindest zwischen der Trägerschicht (14) und der Funktionsschicht (18) abschnittsweise ein Klebemittel vorgesehen ist.

9. Sicherheitsetikett nach einem der vorhergehenden Ansprüche, **dadurch gekennzeichnet, dass** das Indikationsmedium (32) magnetisch ansprechende Metallteilchen umfasst.

10. Sicherheitsetikett nach einem der Ansprüche 1 bis 8, **dadurch gekennzeichnet, dass** das Indikatormedium (32) als Farbpulver, insbesondere als trockener Farbbildner, ausgebildet ist.

11. Sicherheitsetikett nach einem der vorhergehenden Ansprüche, **dadurch gekennzeichnet, dass** eine zwischen der Schutzschicht (22) und der Funktionsschicht (18) vorgesehene Klebemittelschicht (21) außerhalb der Indikatorzone (24) vorgesehen ist.

12. Sicherheitsetikett nach einem der vorhergehenden Ansprüche, **dadurch gekennzeichnet, dass** eine zwischen der Schutzschicht (22) und der Funktionsschicht (18) vorgesehene Klebemittelschicht (21) transparent ausgebildet ist und aus einem nicht härtenden Klebemittel besteht.

13. Sicherheitsetikett nach einem der vorhergehenden Ansprüche, **dadurch gekennzeichnet, dass** in der Indikatorzone (24) ein Aktivator (36) zum erleichterten Öffnen der zumindest einen Sollbruchstelle (29) vorgesehen ist.

14. Sicherheitsetikett nach Anspruch 13, **dadurch gekennzeichnet, dass** der Aktivator (36) im erhöhten Bereich (27) der Indikatorzone (24) vorgesehen ist, wobei der Aktivator (36) vorzugsweise auf der der Vertiefung (31) gegenüberliegenden Seite der Funktionsschicht (18) eingebracht ist.

15. Sicherheitsetikett nach Anspruch 13 oder 14, **dadurch gekennzeichnet, dass** der Aktivator (36) als Kugel ausgebildet ist, der vorzugsweise in einem Laminierprozess in die Indikatorzone (24) eingebracht ist.

## Claims

1. A safety label (11) which allows an external force acting on the safety label (11) to be visualised and which has at least one support layer (14), the support layer (14) receives a function layer (18), and the support layer (14) is covered by protective layer (22) which is transparent at least in specific zones, an indicator medium (32) is provided between the function layer (18) and the support layer (14), and the function layer (18) has at least one indicator zone (24) **characterised in that** the indicator zone (24) comprises at least one predetermined breaking point (29) **in that** manner, that the function layer (29) in the area of the breaking point (29) is not ruptured and then opens when said external force is exerted, such that the indicator medium (32) may pass over to an opposite side of the function layer (18) and be visible through the protective layer (22) which is transparent at least in specific zones.

2. The safety label as claimed in claim 1, **characterised in that** the at least one breaking point (29) in the indicator zone (24) is formed by a depression (31) by which the layer thickness of the function layer (18) is reduced.

3. The safety label as claimed in any of the preceding claims, **characterised in that** several indicator zones (24) are provided which are formed by depressions (31) differing from one another and realised in the respective breaking points (29).

4. The safety label as claimed in any of the preceding claims, **characterised in that** the at least one breaking point (29) of the function layer (18) is created by embossing, stamping, or laser processing.

5. The safety label as claimed in any of the preceding claims, **characterised in that** the function layer (18) is processed on one side only and is applied to the support layer (14) with a given tension.

6. The safety label as claimed in any of the preceding claims, **characterised in that** the indicator zone (24) has an embossed pattern displaying an elevated region (27) as compared with the edge region (26) and that the at least one breaking point (29) is preferably provided in said elevated region (27).

7. The safety label as claimed in claim 6, **characterised in that** the elevated region (27) of the indicator zone (24) is shaped in a pyramidal, frusto-pyramidal, conical, or frusto-conical form.

8. The safety label as claimed in any of the preceding claims, **characterised in that** an indicator medium (32) is introduced at least in the indicator zone (24) and that an adhesive is provided in specific sections at least between the support layer (14) and the function layer (18).

9. The safety label as claimed in any of the preceding claims, **characterised in that** the indicator medium (32) comprises magnetically responsive metal particles.

10. The safety label as claimed in any of the claims 1 to 8, **characterised in that** the indicator medium (32) is realised as a coloured powder, in particular as a dry colour former.

11. The safety label as claimed in any of the preceding claims, **characterised in that** an adhesive layer (21) provided between the protective layer (22) and the function layer (18) is provided in a region outside the indicator zone (24).

12. The safety label as claimed in any of the preceding claims, **characterised in that** an adhesive layer (21) provided between the protective layer (22) and the function layer (18) is transparent and consists of a non-hardening adhesive.

13. The safety label as claimed in any of the preceding claims, **characterised in that** an activator (36) for facilitating the opening of the at least one breaking point (29) is provided in the indicator zone (24).

14. The safety label as claimed in claim 14, **characterised in that** the activator (36) is provided in the elevated region (27) of the indicator zone (24), the activator (36) being preferably introduced on the side of the function layer (18) situated opposite the depression (31).

15. The safety label as claimed in claim 13 or 14, **characterised in that** the activator (36) is shaped in the form of a ball that is preferably introduced into the indicator zone (24) in the course of a lamination process.

## Revendications

1. Etiquette de sécurité permettant de visualiser une force extérieure qui s'exerce sur l'étiquette de sécurité (11), avec au moins une couche support (14) qui reçoit une couche fonctionnelle (18) et qui est, au moins dans certaines zones, recouverte par une couche protectrice transparente (22), un fluide indicateur (32) étant prévu entre la couche fonctionnelle (18) et la couche support (14), et la couche fonctionnelle (18) présentant au moins une zone indicatrice (24), **caractérisée en ce que** la zone indicatrice comprend au moins un point destiné à la rupture (29), de telle sorte que dans la zone du point destiné à la rupture (29) la couche fonctionnelle (18) n'est pas coupée en deux et que le point destiné la rupture (29) ne se rompt que sous l'action d'une force extérieure prédéfinie, de manière à ce que le fluide indicateur (32) puisse passer sur une face opposée de la couche fonctionnelle (18) et soit visible à travers la couche protectrice (22) transparente au moins dans certaines zones.

2. Etiquette de sécurité selon la revendication 1, **caractérisée en ce que** ledit au moins un point destiné à la rupture (29) situé dans la zone indicatrice (24) est réalisé sous la forme d'un creux (31) qui réduit l'épaisseur de la couche fonctionnelle (18).

3. Etiquette de sécurité selon l'une des revendications précédentes, **caractérisée en ce qu'**il est prévu plusieurs zones indicatrices (24) formées par des creux (31) de profondeur différente constituant les points destinés à la rupture (29).

4. Etiquette de sécurité selon l'une des revendications précédentes, **caractérisée en ce que** ledit au moins un point destiné à la rupture (29) de la couche fonctionnelle (18) est réalisé par gaufrage, estampage ou usinage au laser.

5. Etiquette de sécurité selon l'une des revendications précédentes, **caractérisée en ce que** la couche fonctionnelle (18) est usinée sur une seule face et est appliquée sur la couche support (14) avec une tension donnée.

6. Etiquette de sécurité selon l'une des revendications précédentes, **caractérisée en ce que** la zone indicatrice (24) présente une empreinte en relief comportant une zone surélevée (27) par rapport à une zone périphérique (26), et **en ce que** ledit au moins un point destiné à la rupture (29) est prévu de préférence au niveau de la zone surélevée (27).

7. Etiquette de sécurité selon la revendication 6, **caractérisée en ce que** la zone surélevée (27) de la zone indicatrice (24) est réalisée sous forme de pyramide, de pyramide tronquée, de cône ou de cône tronqué.

8. Etiquette de sécurité selon l'une des revendications précédentes, **caractérisée en ce qu'**un fluide indicateur (32) est incorporé au moins dans la zone indicatrice (24), et **en ce qu'**une substance adhésive est prévue dans certaines zones au moins entre la couche support (14) et la couche fonctionnelle (18).

9. Etiquette de sécurité selon l'une des revendications précédentes, **caractérisée en ce que** le fluide indicateur (32) comprend des particules métalliques magnétiquement sensibles.

10. Etiquette de sécurité selon l'une des revendications 1 à 8, **caractérisée en ce que** le fluide indicateur (32) est réalisé sous forme de poudre colorée, en particulier sous forme de substance chromogène sèche.

11. Etiquette de sécurité selon l'une des revendications précédentes, **caractérisée en ce qu'**il est prévu, en dehors de la zone indicatrice (24), une couche de substance adhésive (21) prévue entre la couche protectrice (22) et la couche fonctionnelle (18).

12. Etiquette de sécurité selon l'une des revendications précédentes, **caractérisée en ce qu'**une couche de substance adhésive (21) prévue entre la couche protectrice (22) et la couche fonctionnelle (18) est formée de manière transparente et se compose d'une substance adhésive non durcissable.

13. Etiquette de sécurité selon l'une des revendications précédentes, **caractérisée en ce qu'**un activateur (36) est prévu dans la zone indicatrice (24) en vue de faciliter l'ouverture dudit au moins un point destiné à la rupture (29).

14. Etiquette de sécurité selon la revendication 13, **caractérisée en ce que** l'activateur (36) est prévu au niveau de la zone surélevée (27) de la zone indicatrice (24), l'activateur (36) étant introduit de préférence sur la face de la couche fonctionnelle (18) située à l'opposé du creux (31).

15. Etiquette de sécurité selon la revendication 13 ou 14, **caractérisée en ce que** l'activateur (36) est réalisé sous forme de bille qui est de préférence insérée dans la zone indicatrice (24) lors d'un processus de laminage.
